# EUROPÄISCHE PATENTSCHRIFT

(11) **EP 2 529 072 B1**
(45) Veröffentlichungstag und Bekanntmachung des Hinweises auf die Patenterteilung: **16.11.2016**
(21) Anmeldenummer: 11704031.1
(22) Anmeldetag: 20.01.2011
(51) Int. Cl.: E06B 3/263

(54) **VERFAHREN UND VORRICHTUNG ZUR EVAKUIERUNG VON HOHLRÄUMEN**
METHOD AND DEVICE FOR EVACUATING HOLLOW SPACES
PROCÉDÉ ET DISPOSITIF POUR FAIRE LE VIDE DANS DES CAVITÉS

(30) Priorität: 26.01.2010 AT 1032010; 26.01.2010 AT 1022010
(43) Veröffentlichungstag der Anmeldung: 05.12.2012
(73) Patentinhaber: AMX Automation Technologies GmbH, 4040 Linz (AT)
(72) Erfinder: SCHWAIGER, Meinhard, A-4040 Linz (AT)
(74) Vertreter: Babeluk, Michael
(86) Internationale Anmeldenummer: PCT/EP2011/050717
(87) Internationale Veröffentlichungsnummer: WO 2011/092100

(56) Entgegenhaltungen:
- EP-A1- 0 621 387
- EP-A2- 1 529 921
- DE-U1-202009 013 657
- FR-A1- 2 710 682
- US-A1- 2005 167 856

## Beschreibung

Die vorliegende Erfindung betrifft ein Verfahren zur Evakuierung von Hohlräumen, insbesondere von Hohlkammern von Kunststofffenstern gemäß dem Oberbegriff von Patentanspruch 1, eine Vorrichtung zur Evakuierung nach dem Oberbegriff von Patentanspruch 7 und ein Kunststofffenster nach dem Oberbegriff von Patentanspruch 10. Insbesondere betrifft die Erfindung ein Verfahren, bei dem eine Öffnung in einer Außenwand des Hohlraums geschaffen wird, Luft aus dem Hohlraum abgesaugt wird und danach die Öffnung verschlossen wird.

Als Rahmen im Sinn der vorliegenden Erfindung ist sowohl ein Flügelrahmen als auch ein Stockrahmen zu verstehen. Die Erfindung ist nicht nur auf Fenster, sondern auch auf Türen oder dgl. anwendbar, auch wenn zur Vereinfachung in der Folge nur Fenster diskutiert werden.

Kunststofffenster weisen u.A. den Vorteil einer guten Wärmedämmung auf, die dadurch erreicht wird, dass die verwendeten Profile als Hohlkammerprofile ausgebildet werden. Mit zunehmender Anzahl der so genannten Isolierkammern steigt das Vermögen der Wärmedämmung. Dem Stand der Technik entsprechen heute Fenstersysteme mit zwei bis acht Kammern. Nachteilig wirkt sich dabei aus, dass die Profilsysteme mit zunehmender Anzahl an Hohlkammern bzw. Hohlkammern eine größere Bautiefe aufweisen und höhere Produktionskosten bedingen. Die höheren Produktionskosten ergeben sich aus einem höheren Materialeinsatz bei sinkender Produktionsgeschwindigkeit. So weisen z.B. Systeme mit acht Kammern ein um mindestens 50% höheres Gewicht auf und eine Bautiefe von etwa 75 mm, während für ein Dreikammersystem eine Bautiefe von 50 mm ausreichend ist.

Die Isolierwirkung bei Kunststofffenstersystemen beruht auf dem Isoliervermögen von Luft. Kunststofffenster bestehen u.A. aus einem Blendrahmen und einem Flügelrahmen, die aus auf Gehrung geschnittenen Profilen mittels Verschweißung in den Ecken gefertigt werden. Dabei entstehen abgekapselte Kammern, in denen die Luft eingesperrt ist. Das Isoliervermögen von Mehrkammersystemen ist jedoch physikalisch bedingt bescheiden. Die Wärmeübertragung von einer Kammer zur nächsten erfolgt über die Wärmeleitung im PVC (λ_{PVC} = 0,15 W/mK) und über die Konvektion und Wärmeleitung der eingeschlossenen Luft (λ_{Luft} = 0,026 W/mK). Somit ist nicht die zusätzliche Anzahl an Hohlkammern vordergründig von Vorteil, sondern nur die zusätzliche Bautiefe (lichte Weite der Profilkammern), weil der Anteil der Konvektion an der Wärmeübertragung von der Temperaturdifferenz - zur Ausbildung einer erforderlichen Zirkulation des Gases - zwischen den benachbarten Wänden der Hohlkammern abhängig ist, die mit zunehmender Anzahl der Hohlkammern jedoch stark abnehmend ist.

Eine weitere Maßnahme zur Erhöhung der Wärmedämmung wurde mittels Einbringen von Isolierschaumstoffen (z.B. PU-Hartschaum, (λ_{PU} = 0,035 W/mK) versucht, jedoch mit bescheidenem Erfolg, da derartige Systeme hohe Produktionskosten bedingen, nur eingeschränkt recycelt werden können und große Bautiefen aufweisen.

Zusammengefasst beruhen die Nachteile bei Mehrkammersystemen in einer bescheidenen Wärmedämmung bei gleichzeitig großer Bautiefe und hohen Produktionskosten.

Aus der DE 195 37 459 C1 oder der EP 0 556 600 B1 ist es bekannt, die Isoliereigenschaften eines Fensterprofils dadurch zu verbessern, das einzelne Hohlkammern evakuiert werden. Auf diese Weise ist es möglich, die Wärmeverluste am Hauptabschnitt eines Fensterprofils zu verringern. Es hat sich jedoch als produktionstechnisch problematisch herausgestellt, das Vakuum im Inneren der Hohlräume herzustellen.

Die EP 1 529 921 A zeigt eine Vorrichtung nach dem Oberbegriff des Anspruchs 7 und betrifft eine Verschlusseinheit die dazu geeignet ist über eine Öffnung evakuiert zu werden. Mit einer solchen Verschlusseinheit kann jedoch eine komplizierte Struktur wie ein Fenster mit mehreren Kammern nicht in geeigneter Weise bearbeitet werden.

Die US 2005/0167 856 offenbart eine Glassscheibe, deren Zwischenraum evakuierbar ist. Hier gelten ähnliche Nachteile.

Weiters ist es aus der DE 20 2009 013 657 U bekannt, einen Fensterrahmen mit komplexem Hohlprofil zu evakuieren. Dabei wird jedoch nur eine einzige Kammer evakuiert, was die Wirkung entsprechend verlängert.

Dieses Dokument offenbart ein Verfahren nach dem Oberbegriff des Anspruchs 1 und ein Kunststofffenster nach dem Oberbegriff des Anspruchs 10.

Aufgabe der vorliegenden Erfindung ist es, ein Verfahren anzugeben, mit dem es möglich ist, eine oder mehrere Profilkammern zu evakuieren, wobei der Verschluss der Öffnung, durch die die Luft abgesaugt wird, einfach und dauerhaft erfolgt. Eine weitere Aufgabe der vorliegenden Erfindung ist es, das Verfahren so weiterzubilden, dass mehrere Profilkammern in einer produktionstechnisch akzeptablen Weise evakuierbar sind.

Erfindungsgemäß werden diese Aufgaben durch die Merkmale von Patentanspruch 1 gelöst. Insbesondere ist vorgesehen, dass die Öffnung durch einen Saugrüssel abgeschlossen wird und unmittelbar nach dem Absaugen der Luft ein Verschluss auf die Öffnung aufgebracht wird, um diese zu verschließen, wonach vorzugsweise der Saugrüssel abgehoben wird. Wesentlich ist dabei, dass das Absaugen und Verschließen der Öffnung in einer Aufspannung mit einem Werkzeug durchgeführt wird, um jeglichen Falschlufteintritt zuverlässig zu vermeiden. Auf diese Weise kann ein Druck in einem Bereich von 10⁻³ mbar (Feinvakuum) bis 100 mbar (absolut) problemlos erreicht werden. Durch ein solches Druckniveau können die thermischen Eigenschaften erheblich verbessert werden, weil die Wärmeübertragung in Gasen in einem Feinvakuum nahezu zum Erliegen kommt, so dass die Erfüllung der Standards für Niedrigenergiehäuser oder Passivhäuser wesentlich erleichtert wird.

Es ist vorteilhaft, wenn der Verschluss gegenüber der Außenwand des Hohlraums bewegt wird, um den Verschluss thermisch mit der Außenwand des Hohlraums zu verbinden. Die Verbindung erfolgt dabei in der Art, die dem Reibschweißen entspricht. Durch die entstehende Reibungswärme werden der bevorzugt aus PVC bestehende Verschluss sowie die ebenfalls aus PVC bestehende Außenwand an der Berührungsstelle so stark erwärmt, dass ein Aufschmelzen der Fügepartner an der Fügefläche erfolgt und eine dauerhafte Verbindung geschaffen wird. Die Bewegung kann grundsätzlich oszillatorisch, beispielsweise im Ultraschall-Frequenzbereich erfolgen. Besonders bevorzugt ist es, wenn die Bewegung eine Drehbewegung ist. Diese Drehbewegung erfolgt in der Regel um die Achse der Öffnung.

An sich ist es durchaus möglich, den Verschluss plan auf die Außenwand aufzubringen. Besonders sicher kann die Verbindung jedoch gestaltet werden, wenn der Verschluss zumindest teilweise in die Öffnung eingeführt wird. Dadurch kann auch eine formschlüssige und zusätzlich kraftschlüssige Verbindung geschaffen werden, da der Verschluss einerseits in die Öffnung eindringt und diese selbst verschießt und andererseits im Bereich der Außenfläche rund um den Verschluss eine zusätzliche Abdichtung erfolgt.

Eine besonders begünstigte Ausführungsvariante des erfindungsgemäßen Verfahrens sieht vor, dass das Absaugen aus einem ersten Schritt, bei dem ein erster Unterdruck erzeugt wird, wonach ein Edelgas in die Öffnung einströmen gelassen wird, und aus einem zweiten Schritt besteht, in dem der endgültige Unterdruck erzeugt wird. Auf diese Weise kann die Isolationswirkung verstärkt werden, da Edelgase insbesondere bei verringertem Druck eine hervorragende Isolierwirkung, d.h. eine verringerte Wärmeleitfähigkeit aufweisen, da sowohl ein verringerter Druck als auch eine mit Edelgas angereicherte Gaszusammensetzung vorliegen.

Es ist im Sinn der Erfindung vorgesehen, wenn vor dem Absaugen mindestens eine Überströmöffnung zwischen der ersten Hohlkammer und einer weiteren Hohlkammer hergestellt wird. Auf diese Weise ist es möglich, durch eine einzige Öffnung mehrere Kammern des Rahmens zu evakuieren. An sich ist es gefordert, dass die einzelnen Kammern eines Profils bzw. eines Rahmens voneinander getrennt sind, um Konvektionsströmungen zu vermeiden, die für einen unerwünschten Wärmetransport verantwortlich sind. Es hat sich aber überraschenderweise herausgestellt, dass einzelne Überströmöffnungen nicht schädlich sind, sofern sie ausreichend klein ausgebildet sind und sofern nicht mehrere Überströmöffnungen räumlich entfernt voneinander vorgesehen sind.
Die Herstellung kann dadurch besonders erleichtert werden, dass die Überströmöffnung im Bereich der auf Gehrung geschnittenen Profilabschnitte vor dem Verschweißen hergestellt wird, indem in einem Steg eine Ausnehmung hergestellt wird. Diese Ausbildung hat sich auch strömungstechnisch als günstig herausgestellt, um eine schnelle und effiziente Evakuierung zu erreichen.

Weiterhin betrifft die vorliegende Erfindung eine Vorrichtung zur Evakuierung von Hohlkammern von Kunststofffenstern, mit einem Saugrüssel zum Absaugen von Luft aus einer Öffnung.

Im Saugrüssel der Vorrichtung ist ein in Axialrichtung verfahrbarer Stempel angeordnet, der zum Aufdrücken eines Verschlusses auf die Öffnung ausgebildet ist. Auf diese Weise kann bei zurückgezogenem Stempel das Absaugen der Luft durchgeführt werden. Insbesondere kann der Stempel dabei hinter den eigentlichen Saugrüssel zurückgezogen werden, so dass das Lumen nicht durch Einbauten blockiert wird, was für die Effizienz beim Absaugen vorteilhaft ist. Der Stempel dient zum Andrücken und Bewegen des Verschlusses.

Weiterhin ist der Stempel drehbar angeordnet. Durch die Drehbewegung kann die notwendige Reibungswärme zum Verschweißen erzeugt werden. Typische Drehzahlen liegen dabei zwischen 500 min⁻¹ und 12.000 min⁻¹. Vorteilhaft ist, wenn die Drehbewegung nach Erreichen der Aufschmelzung sehr rasch zum Stillstand kommt. So kann eine zuverlässige Verbindung hergestellt werden.

Der Stempel liegt in einem Bereich, der betriebsmäßig auf einem niedrigen Druckniveau gehalten wird, so dass die Mechanik besonders sorgfältig ausgeführt sein sollte. Insbesondere ist es von Vorteil, wenn auf die Anwesenheit von Schmiermitteln, pneumatischen oder hydraulischen Komponenten in diesem Bereich verzichtet wird. Daher hat es sich besonders bewährt, wenn eine hermetisch abgeschlossene Magnetkupplung vorgesehen ist, um ein Drehmoment auf den Stempel zu übertragen. Dadurch kann der evakuierte Bereich vollständig gekapselt werden. Im Inneren sind lediglich schmiermittelfreie Kunststoff-Gleitlager vorgesehen, so dass den obigen Überlegungen Rechnung getragen wird. Im diesem Sinne ist erfindungsgemäß ein Elektromagnet vorgesehen um den Stempel samt Verschluss auf die Öffnung zu drücken. Damit kann auch die Axialbewegung unkritisch ausgebildet werden.

Eine besonders günstige Abdichtung des Stempels während dem Absaugen kann erreicht werden, wenn der Stempel an seinem vorderen Ende eine Schneide aufweist, die dazu ausgebildet ist, dichtend an die Außenwand gedrückt zu werden.

Weiterhin betrifft die vorliegende Erfindung ein Kunststofffenster mit einem Rahmen, der aus mehreren mit Hohlkammern versehenen Profilabschnitten besteht, die an den Enden verschweißt sind, wobei mindestens eine erste Hohlkammer evakuiert ist.

Dieses Kunststofffenster ist erfindungsgemäß dadurch gekennzeichnet, dass eine Überströmöffnung zwischen der ersten Hohlkammer und einer weiteren Hohlkammer vorgesehen ist. Durch die strömungsmäßige Verbindung ist es möglich, mehrere Kammern gleichzeitig zu evakuieren. Bevorzugt ist jeweils nur eine Überströmöffnung zwischen zwei Kammern ausgebildet, die gerade ausreichend groß bemessen ist, um eine effiziente Evakuierung zu gewährleisten. Je nach Rahmengröße beträgt die Querschnittsfläche beispielsweise zwischen 5 mm² und 200 mm², kann aber auch bei entsprechend effizienten Absaugwerkzeugen unterhalb von 5 mm² liegen.

Besonders vorzugsweise ist vorgesehen, dass die Überströmöffnung im einem Eckbereich des Rahmens in einem Steg angeordnet ist, der zwischen der ersten Hohlkammer und der weiteren Hohlkammer ausgebildet ist. Dies hat sich produktionstechnisch als besonders günstig herausgestellt.

Es ist ferner bevorzugt, wenn die Öffnung zum Absaugen in einer Sichtfläche des Rahmens angeordnet ist. Dadurch kann eine besonders wirksame Abdichtung während des Absaugens erreicht werden, da Sichtflächen aus ästhetischen Gründen eine besondere Güte hinsichtlich ebener Ausbildung und glatter Oberfläche aufweisen.

In der Folge wird die vorliegende Erfindung anhand der in den Figuren dargestellten Ausführungsbeispiele näher erläutert. Es zeigen:
- Fig. 1: einen Fensterrahmen schematisch in einer Ansicht von vorne;
- Fig. 2: ein Detail des Fensterrahmens von Fig. 1 in axonometrischer Ansicht;
- Fig. 3: eine Explosionsdarstellung eines Teils eines Fensterrahmens;
- Fig. 4: ein Detail von Fig. 1;

- Fig. 5: eine Vorrichtung zum Absaugen von Luft; und
- Fig. 6: ein Detail von Fig. 5.

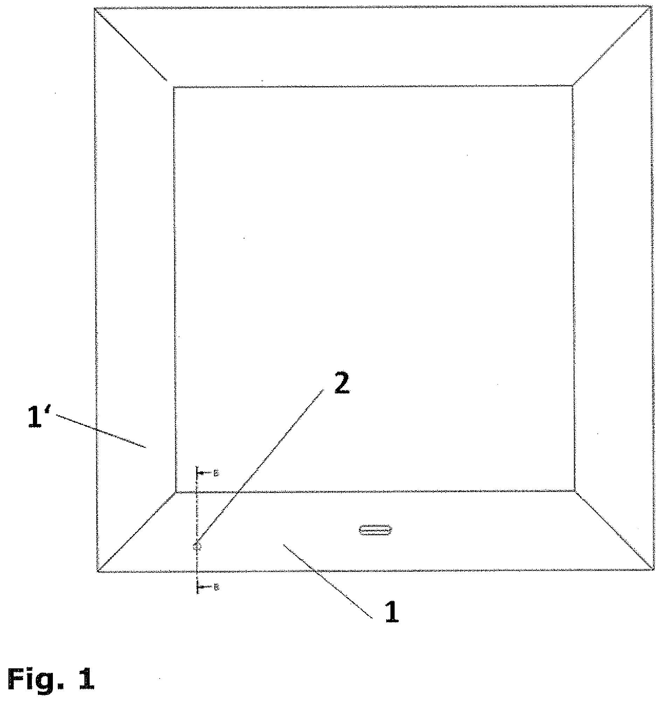

Fig. 1 zeigt einen Fensterrahmen in Ansicht, bestehend aus einem horizontalen unteren Profilstab 1 und einem vertikalen Profilstab 1', wobei der untere horizontale Profilstab 1 mit einem Verschluss 2 versehen ist, der eine hier nicht sichtbare Vakuumkammer abdichtet.

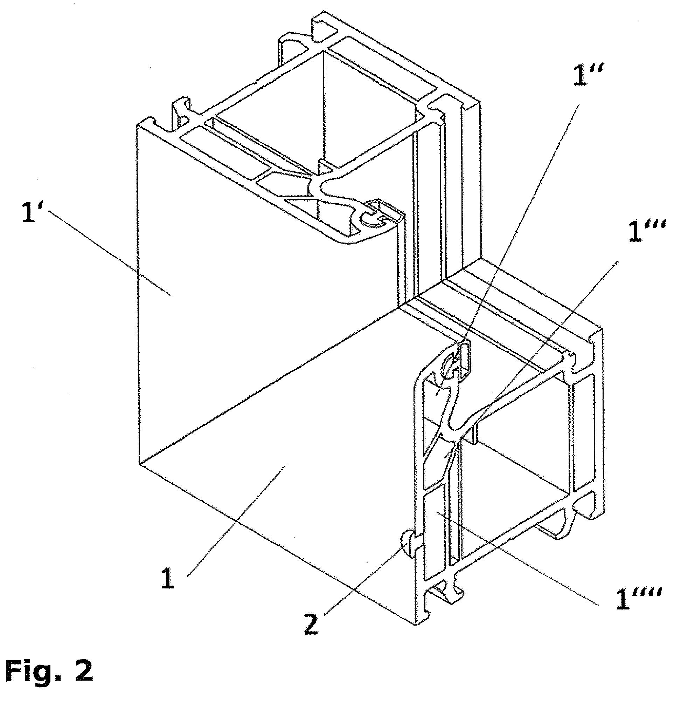

Fig. 2 zeigt eine Detaildarstellung der Rahmenecke des Fensterrahmens von Fig. 1, bestehend aus den Profilstäben 1, 1', dem Verschluss 2, den Hohlkammern 1", 1"', 1"", wobei zumindest die Hohlkammer 1"" evakuiert ist.

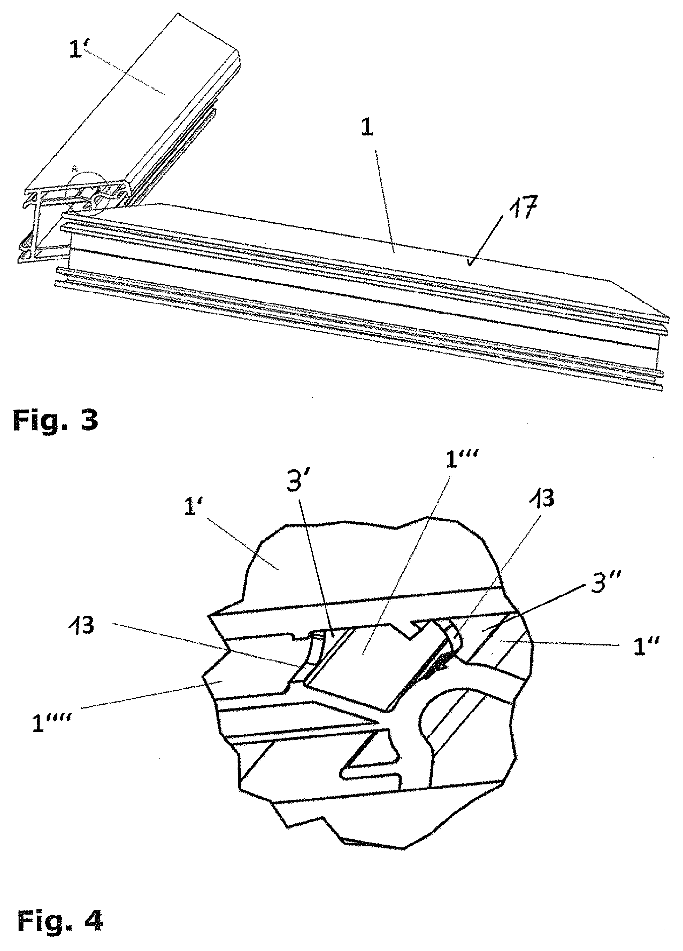

Fig. 3 zeigt eine Rahmenecke, mit auf Gehrung geschnittenen Profilstäben 1, 1' vor dem Verschweißen der Profilstäbe zu einem Fensterrahmen.

Fig. 4 zeigt das Detail A aus Fig. 3 und zwar die Freistellung 13 der Stege 3', 3", ausgebildet als Überströmöffnung, damit das Vakuum in den Hohlkammern 1", 1"', 1"" erzeugt werden kann, mit nur einer Absaugöffnung in einem der Profilstäbe 1, 1' Die Freistellung 13 wird vor dem Verschweißen der Profilstäbe 1, 1' ausgefräst.

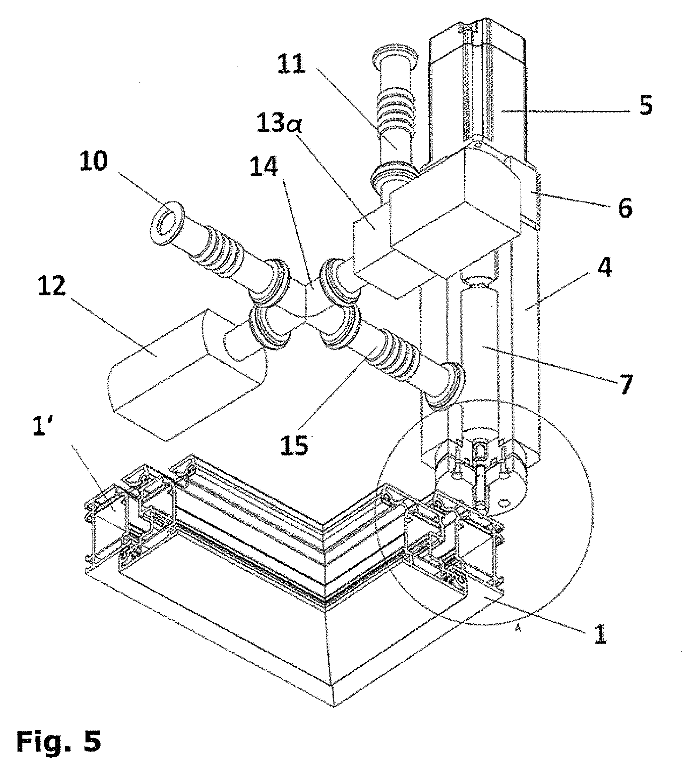

Fig. 5 zeigt die erfindungsgemäße Vorrichtung zur Erzeugung des Vakuums in den Hohlkammern 1", 1"', 1"". Die Vorrichtung besteht aus einem Grundkörper 4 und einem daran angeflanschten Antriebsmotor 5 zur Erzeugung der Drehbewegung des Verschluss 2. Der Innenraum des Grundkörpers 4 ist hermetisch abgedichtet, so dass der Antriebsmotor 5 vom Vakuum nicht beeinflusst wird und unter Umgebungsdruck arbeitet. Das Drehmoment des Antriebsmotors 5 wird über eine Magnetkupplung 6 übertragen.

Eine Vorschubeinheit 7 ist vorzugsweise als Hubmagnet ausgebildet, um den Anpressdruck am Stempel 9 in Axialrichtung zu erzeugen.

Weiters sind eine Anschlussleitung zur Vakuumpumpe 10, eine Anschlussleitung 11 zur Edelgasbefüllung, ein Vakuumdrucksensor 12 zur Prozessüberwachung, ein Vakuumschaltventil 13a zur Zuleitung von Edelgasen, ein Leitungsteil 14 und eine Anschlussleitung 15 an die Vorrichtung vorgesehen.

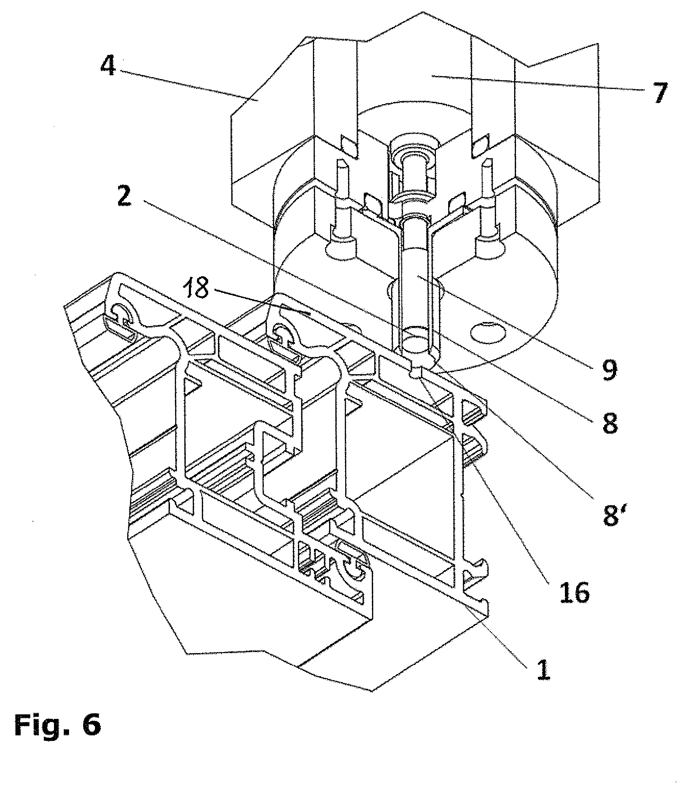

Fig. 6 zeigt eine Detaildarstellung (A) aus Fig. 5. Der Saugrüssel 8 mit der als scharfkantiger Schneide ausgebildeten Vorderkante 8' wird fest über eine als Bohrung ausgebildete Öffnung 16 im Profilstab 1 auf die Oberfläche 18 gedrückt, die in einer Sichtfläche 17 des Rahmens angeordnet ist, so dass eine vakuumfeste Verbindung des Saugrüssels 8 mit der Profiloberfläche gegeben ist. Der verfahrbare Stempel 9 nimmt den Verschluss 2 auf und presst diesen nach erfolgter Evakuierung der Hohlkammer(n) 1", 1"', 1"" auf die Öffnung 16, versetzt den Verschluss 2 in Rotation oder in eine andere Schwingung, damit unter Anpressdruck, erzeugt von der Vorschubeinheit 7 und Bewegung, erzeugt vom Antriebsmotor 5 eine Verschweißung des Verschlusses 2 mit dem Profilstab 1 unter Vakuum erfolgt.

## Patentansprüche

1. Verfahren zur Evakuierung von Hohlkammern (1", 1"', 1"") von Kunststofffenstern, bei dem eine Öffnung (16) in einer Außenwand (18) der Hohlkammer (1", 1"', 1"") geschaffen wird, die Öffnung (16) durch einen Saugrüssel (8) abgeschlossen wird, Luft aus der Hohlkammer (1", 1"', 1"") abgesaugt wird und unmittelbar nach dem Absaugen der Luft ein Verschluss (2) auf die Öffnung (16) aufgebracht wird, um diese zu verschließen, wobei mehrere auf Gehrung geschnittene, mit mehreren Hohlkammern (1", 1"', 1"") versehene Profilabschnitte (1, 1') an den Enden verschweißt werden, um einen Rahmen zu bilden, und dass mindestens eine erste Hohlkammer (1") evakuiert wird, indem die Öffnung (16) in einer Außenwand (18) der ersten Hohlkammer (1") geschaffen wird, Luft aus der ersten Hohlkammer (1") abgesaugt wird und danach die Öffnung (16) verschlossen wird, **dadurch gekennzeichnet, dass** vor dem Absaugen und vorzugsweise vor dem Verschweißen mindestens eine Überströmöffnung in Form einer Freistellung (13) in einem Steg (3', 3") zwischen der ersten Hohlkammer (1") und einer weiteren Hohlkammer (1"', 1"") hergestellt wird.

2. Verfahren nach Anspruch 1, **dadurch gekennzeichnet, dass** nach dem Aufbringen des Verschlusses (2) auf die Öffnung (16) der Saugrüssel (8) abgehoben wird.

3. Verfahren nach einem der Ansprüche 1 oder 2, **dadurch gekennzeichnet, dass** der Verschluss (2) gegenüber der Außenwand (18) der Hohlkammer (1", 1"', 1"") bewegt wird, um den Verschluss (2) thermisch mit der Außenwand (18) der Hohlkammer (1", 1"', 1"") zu verbinden, wobei die Bewegung bevorzugt eine Drehbewegung oder eine translatorische Schwingung ist.

4. Verfahren nach einem der Ansprüche 1 bis 3, **dadurch gekennzeichnet, dass** der Verschluss (2) zumindest teilweise in die Öffnung (16) eingeführt wird.

5. Verfahren nach einem der Ansprüche 1 bis 4, **dadurch gekennzeichnet, dass** der Verschluss (2) durch Magnetkraft auf die Öffnung (16) aufgedrückt wird.

6. Verfahren nach einem der Ansprüche 1 bis 5, **dadurch gekennzeichnet, dass** das Absaugen aus einem ersten Schritt, bei dem ein erster Unterdruck erzeugt wird, wonach ein Edelgas in die Öffnung (16) einströmen gelassen wird, und aus einem zweiten Schritt besteht, in dem der endgültige Unterdruck erzeugt wird.

7. Vorrichtung zur Evakuierung von Hohlkammern (1", 1"', 1"") von Kunststofffenstern, nach Anspruch 1, mit einem Saugrüssel (8) zum Absaugen von Luft aus einer Öffnung, wobei im Saugrüssel (8) ein in Axialrichtung verfahrbarer Stempel (9) angeordnet ist, der zum Aufdrücken eines Verschlusses (2) auf die Öffnung (16) ausgebildet ist, **dadurch gekennzeichnet, dass** der Stempel (9) drehbar angeordnet ist und dass eine Magnetkupplung (6) vorgesehen ist, um ein Drehmoment auf den Stempel (9) zu übertragen.

8. Vorrichtung nach Anspruch 7, **dadurch gekennzeichnet, dass** ein Elektromagnet (7) vorgesehen ist, um den Stempel (9) samt Verschluss (2) auf die Öffnung zu drücken.

9. Vorrichtung nach einem der Ansprüche 7 oder 8, **dadurch gekennzeichnet, dass** der Saugrüssel (8) an seinem vorderen Ende eine Schneide (8') aufweist, die dazu ausgebildet ist, dichtend an die Außenwand (18) gedrückt zu werden.

10. Kunststofffenster mit einem Rahmen, der aus mehreren mit Hohlkammern (1", 1"', 1"") versehenen Profilabschnitten (1, 1') besteht, die an den Enden verschweißt sind, wobei mindestens eine erste Hohlkammer (1") evakuiert ist, **dadurch gekennzeichnet, dass** mindestens eine Überströmöffnung in Form einer Freistellung (13) in einem Steg (3', 3") zwischen der ersten Hohlkammer (1") und einer weiteren Hohlkammer (1"', 1"") vorgesehen ist.

11. Kunststofffenster nach Anspruch 10, **dadurch gekennzeichnet, dass** die Überströmöffnung in einem Eckbereich des Rahmens in einem Steg (3', 3") angeordnet ist, der zwischen der ersten Hohlkammer (1") und der weiteren Hohlkammer (1"', 1"") ausgebildet ist.

12. Kunststofffenster nach einem der Ansprüche 10 oder 11, **dadurch gekennzeichnet, dass** die Öffnung (16) zum Absaugen in einer Sichtfläche (17) des Rahmens angeordnet ist.

13. Kunststofffenster nach einem der Ansprüche 10 bis 12, **dadurch gekennzeichnet, dass** der Druck in der ersten Hohlkammer (1") zwischen 10⁻³ mbar und 100 mbar beträgt und dass die Hohlkammer (1") vorzugsweise überwiegend mit einem Edelgas gefüllt sein kann.

14. Kunststofffenster nach einem der Ansprüche 10 bis 13, **dadurch gekennzeichnet, dass** die Öffnung (16) zum Absaugen durch einen Verschluss (2) verschlossen ist, der durch Reibschweißung, Klebung oder Formschluss mit der Außenwand (18) verbunden ist.

## Claims

1. A method for evacuating hollow chambers (1", 1"', 1"") of plastic windows, in which an opening (16) is produced in an outer wall (18) of the hollow chamber (1", 1"', 1""), the opening (16) is sealed by a suction trunk (8), air is evacuated from the hollow chamber (1", 1"', 1""), and a seal (2) is placed on the opening (16) directly after the evacuation of the air in order to seal said opening, wherein several profile sections (1, 1') which are cut in a mitered manner and provided with several hollow chambers (1", 1"', 1"") are welded at the ends in order to form a frame, and at least one first hollow chamber (1") is evacuated in that the opening (16) is produced in an outer wall (18) of the first hollow chamber (1"), air is evacuated from the first hollow chamber (1"), and thereupon the opening (16) is closed off, **characterised in that** prior to the evacuation and preferably prior to the welding at least one transfer opening in form of an exposed area (13) in a web (3', 3") is produced between the first hollow chamber (1") and a further hollow chamber (1"', 1"").

2. A method according to claim 1, **characterised in that** the suction trunk (8) is lifted off after the application of the seal (2) onto the opening (16).

3. A method according to one of the claims 1 or 2, **characterised in that** the seal (2) is moved in relation to the outer wall (18) of the hollow chamber (1", 1"', 1"") in order to thermally connect the seal (2) to the outer wall (18) of the hollow chamber (1", 1"', 1""), wherein the movement is preferably a rotary movement or a translatory oscillation.

4. A method according to one of the claims 1 to 3, **characterised in that** the seal (2) is introduced at least partly into the opening (16).

5. A method according to one of the claims 1 to 4, **characterised in that** the seal (2) is pressed against the opening (16) by magnetic force.

6. A method according to one of the claims 1 to 5, **characterised in that** the evacuation consists of a first step in which a first vacuum is produced, whereupon a noble gas is allowed to flow into the opening (16), and of a second step in which the final vacuum is produced.

7. An apparatus for the evacuation of hollow chambers (1", 1"', 1"") of plastic windows according to claim 1, comprising a suction trunk (8) for evacuating air from an opening, wherein a stamp (9) which is movable in the axial direction is arranged in the suction trunk (8), said stamp being formed to press a seal (2) onto the opening (16), **characterised in that** the stamp (9) is rotatably arranged, and a magnetic coupling (6) is provided in order to transmit a torque onto the stamp (9).

8. An apparatus according to claim 7, **characterised in that** an electromagnet (7) is provided in order to press the stamp (9) plus seal (2) onto the opening.

9. An apparatus according to one of the claims 7 or 8, **characterised in that** the suction trunk (8) comprises a blade (8') at its front end, said blade being formed to be pressed in a sealing manner against the outer wall (18).

10. A plastic window with a frame which consists of several profile sections (1, 1') provided with hollow chambers (1", 1"', 1""), which profile sections are welded together at the ends, wherein at least one first hollow chamber (1") is evacuated, **characterised in that** at least one transfer opening in form of an exposed area (13) is provided in a web (3', 3") between the first hollow chamber (1") and a further hollow chamber (1"', 1"").

11. A plastic window according to claim 10, **characterised in that** the transfer opening is arranged in a corner region of the frame in a web (3', 3") which is formed between the first hollow chamber (1") and the further hollow chamber (1"', 1"").

12. A plastic window according to one of the claims 10 or 11, **characterised in that** the opening (16) is arranged for evacuation in a visible surface (17) of the frame.

13. A plastic window according to one of the claims 10 to 12, **characterised in that** the pressure in the first hollow chamber (1") is between 10⁻³ mbar and 100 mbar, and the hollow chamber (1") can be preferably mainly be filled with a noble gas.

14. A plastic window according to one of the claims 10 to 13, **characterised in that** the opening (16) for evacuation is closed off by a seal (2) which is connected to the outer wall (18) by means of friction welding, gluing or interlocking.

## Revendications

1. Procédé pour faire le vide dans des cavités (1", 1 "', 1 "") de fenêtre en matière plastique, selon lequel on réalise une ouverture (16) dans une paroi extérieure (18) de la cavité (1", 1"', 1""), on ferme cette ouverture (16) avec un bec d'aspiration (8) pour aspirer l'air de la cavité (1", 1'", 1"") et immédiatement après l'aspiration de l'air, on applique une fermeture (2) sur l'orifice (16) pour le fermer,
plusieurs segments de profilés (1, 1') coupés à l'onglet, ayant plusieurs cavités (1", 1'", 1 ""), étant soudés par les extrémités pour former un cadre et
on fait le vide dans au moins une première cavité (1") en réalisant l'orifice (16) dans la paroi extérieure (18) de la première cavité (1"), en aspirant l'air de cette première cavité (1") et en fermant ensuite l'orifice (16),
procédé **caractérisé en ce qu'**
avant d'aspirer, de préférence avant de souder, on réalise au moins un orifice de passage sous la forme d'un dégagement (13) dans une branche (3', 3") entre la première cavité (1") et une autre cavité (1"', 1"").

2. Procédé selon la revendication 1,
**caractérisé en ce qu'**
après avoir appliqué la fermeture (2) sur l'orifice (16) on dégage le bec d'aspiration (8).

3. Procédé selon l'une des revendications 1 ou 2,
**caractérisé en ce qu'**
on déplace la fermeture (2) par rapport à la paroi extérieure (18) de la cavité (1", 1"', 1"") pour relier la fermeture (2) à la paroi extérieure (18) de la cavité (1", 1"', 1"") de manière thermique, le mouvement étant de préférence un mouvement de rotation ou une oscillation en translation.

4. Procédé selon l'une des revendications 1 à 3,
**caractérisé en ce qu'**
on introduit au moins partiellement la fermeture (2) dans l'orifice (16).

5. Procédé selon l'une des revendications 1 à 4,
**caractérisé en ce qu'**
on applique la fermeture (2) sur l'orifice (16) par une force magnétique.

6. Procédé selon l'une des revendications 1 à 5,
**caractérisé en ce que**
l'aspiration se compose d'une première étape selon laquelle on crée une première dépression et ensuite on introduit un gaz noble dans l'orifice (16) et d'une seconde étape par laquelle on crée la dépression définitive.

7. Dispositif pour faire le vide dans des cavités (1", 1"', 1 "") de fenêtre en matière plastique selon la revendication 1 à l'aide d'un bec d'aspiration (8) pour aspirer l'air d'un orifice,
le bec d'aspiration (8) ayant un poinçon (9) mobile dans la direction axiale pour presser une fermeture (2) dans l'orifice (16),
dispositif **caractérisé en ce que**
le poinçon (9) est monté rotatif et un couplage magnétique (6) est prévu pour transmettre le couple au poinçon (9).

8. Dispositif selon la revendication 7,
**caractérisé en ce qu'**
il comporte un électroaimant (7) pour pousser le poinçon (9) avec la fermeture (2) contre l'ouverture.

9. Dispositif selon la revendication 7 ou 8,
**caractérisé en ce que**
l'extrémité avant du bec d'aspiration (8) comporte une arête de coupe (8') pour être poussée de manière étanche contre la paroi extérieure (18).

10. Fenêtre en matière plastique comportant un cadre formé de plusieurs segments de profilés (1, 1') ayant des cavités (1", 1"', 1""), ces segments de profilés étant soudés par les extrémités et on fait le vide au moins dans une première chambre (1"),
fenêtre **caractérisée en ce qu'**
au moins un orifice de passage sous la forme d'un dégagement (13) est prévu dans la branche (3', 3") entre la première cavité (1") et une autre cavité (1"', 1"").

11. Fenêtre en matière plastique selon la revendication 10,
**caractérisée en ce que**
le passage est prévu dans une zone de coin du cadre, dans une branche (3', 3") entre la première cavité (1") et les autres cavités (1"', 1"").

12. Fenêtre en matière plastique selon la revendication 10,
**caractérisée en ce que**
l'orifice (16) pour aspirer est réalisé dans une surface visible (17) du cadre.

13. Fenêtre en matière plastique selon l'une des revendications 10 à 12,
**caractérisée en ce que**
la pression régnant dans la première cavité (1") est comprise entre 10⁻³ mbar et 100 mbar et la cavité (1") est de préférence principalement remplie d'un gaz rare.

14. Fenêtre en matière plastique selon l'une des revendications 10 à 13,
**caractérisée en ce que**
l'orifice (16) pour aspirer est fermé par une fermeture (2) reliée à la paroi extérieure (18) par un soudage par friction, collage ou par une liaison par la forme.
